Europäisches Patentamt

European Patent Office

Office européen des brevets

(19)

(11) Veröffentlichungsnummer: **0 264 591 B1**

(12) **EUROPÄISCHE PATENTSCHRIFT**

(45) Veröffentlichungstag der Patentschrift: 17.04.91

(21) Anmeldenummer: 87112608.2

(22) Anmeldetag: 29.08.87

(51) Int. Cl.⁵: **G01M 11/02, G01S 3/78, G02B 23/00**

(54) Verfahren zur Vermessung der optischen Achse eines Leitstrahlprojektors und Einrichtung zur Durchführung des Verfahrens.

(30) Priorität: 21.10.86 DE 3635689

(43) Veröffentlichungstag der Anmeldung:
27.04.88 Patentblatt 88/17

(45) Bekanntmachung des Hinweises auf die Patenterteilung:
17.04.91 Patentblatt 91/16

(84) Benannte Vertragsstaaten:
**DE ES FR GB IT**

(56) Entgegenhaltungen:
DE-A- 2 821 170     DE-A- 3 439 273
FR-A- 2 373 074     GB-A- 1 218 051
US-A- 4 014 482     US-A- 4 110 046

PATENT ABSTRACTS OF JAPAN, Band 6, Nr. 96 (P-120)[974], 4. Juni 1982; & JP - A - 57 29922 (TOKYO KOUGAKU KIKAI K.K.) 18.02.1982

(73) Patentinhaber: **Messerschmitt-Bölkow-Blohm Gesellschaft mit beschränkter Haftung Robert-Koch-Strasse W-8012 Ottobrunn(DE)**

(72) Erfinder: **Fendt, Alfred, Dr. Malerwinkel 5 W-8000 München 71(DE)**

## Beschreibung

Die Erfindung bezieht sich auf ein Verfahren zur Harmonisierung der optischen Achse eines Leitstrahlprojektors und eines Visiergerätes sowie einer Vorrichtung zur Durchführung des Verfahrens gemäß dem Oberbegriff der Ansprüche 1 und 2.

Durch die DE 34 39 273 C1 ist eine Vorrichtung zur Harmonisierung der Sichtlinien bzw. der optischen Achsen eines Leitstrahlprojektors und eines Visiergerätes bekanntgeworden. Hier wird die Ablage zwischen der Leitstrahlachse und der Achse eines Tagsichtgerätes dadurch bestimmt, daß aus dem Leitstrahl ein Referenzstrahl nach Passieren eines Drehkeilpaares ausgekoppelt und vermessen wird.

Durch die DE 25 36 878 B2 ist ein elektrooptisches Rückstrahl-Ortungsgerät bekanntgeworden, das als Justierhilfe einen Tripelstreifen verwendet, der es gestattet, auch bei fest eingebautem Gerät eine Justierkontrolle vorzunehmen.

Es sind verschiedene Verfahren bekannt, nach denen die Parallelität der Achsen von Fernrohren, Wärmebildgeräten und Leitstrahlsendern geprüft werden kann. Ein sog. Reticle-Bildfeldmodulationsverfahren ist in seiner Modifizierung sowohl aus der US 40 14 482 als auch aus der US 43 00 736 bekannt geworden. Unabhängig von der Art und Weise, wie dabei die Achsen optisch zur Überlagerung gebracht oder gekoppelt werden, beruhen diese Verfahren auf der punktweisen Abtastung des Leitstrahles durch einen Prüfdetektor; d.h., in der Ebene, in die der zurückreflektierte Leitstrahl fokussiert wird, befindet sich ein Detektor mit Nadellochblende, der vollkommen analog zum Empfänger im Flugkörper einen winzigen Bereich des gesamten Leitstrahles empfängt. Diese Art der Achsprüfung macht es erforderlich, daß die gesamte Ortungselektronik des Empfängers im Flugkörper auch in den Sender eingebaut wird, wodurch dieser an Gewicht, Komplexität und Kosten zunimmt. Bei der letztgenannten Ausführungsform wird die Relativbewegung eines rotierenden Leitstrahlmusters, das durch eine rotierende Sektorblende erzeugt wird, und eines um die eigene Achse rotierenden Flugkörpers benutzt, um aus dem Signal eines exzentrisch am Flugkörper angebrachten Empfängers die Ablage des Flugkörpers von der Rotationsachse des Leitstrahlmusters zu bestimmen.

Der vorliegenden Erfindung liegt die Aufgabe zugrunde, die Nachteile des Standes der Technik zu beseitigen und eine automatische Achsprüfung der Bodenanlage eines Fernlenksystems aufzuzeigen, die eine wesentliche Vereinfachung der Elektronik des Achsharmonisierungssystems zuläßt.

Diese Aufgabe wird durch die im Anspruch 1 aufgezeigten Maßnahmen gelöst. In den Ansprüchen 2 und 3 sind konstruktive Ausführungsmerkmale angegeben und in der nachfolgenden Beschreibung ist ein Ausführungsbeispiel des vorgeschlagenen Verfahrens und seine konstruktive Konzeption abgehandelt. Die Figuren der Zeichnung ergänzen die Erläuterungen in der Beschreibung. Es zeigen

Fig. 1 ein Schemabild des beschriebenen Achsharmonisierungsverfahrens und seiner konstruktiven Merkmale,

Fig. 2 eine schematische Darstellung der vorgeschlagenen Blendenkopfkonfiguration,

Fig. 3 ein Diagramm für die typische Form des Prüfdetektorsignals,

Fig. 4 ein Schemabild bezüglich der Signalverarbeitung mit Koinzidenzimpuls, Referenzimpuls und dem entsprechenden Produktsignal.

Bei der Integration eines Leitstrahlsenders in ein Visiersystem muß darauf geachtet werden, daß die optischen Achsen beider Teilsysteme mit höchster Präzision parallel zueinander ausgerichet sind und daß die Achsparallelität unter allen operationellen Bedingungen erhalten bleibt. Aus diesen Gründen wird bei der Entwicklung von Leitstrahlanlagen der Einbau eines automatischen Achsprüf- und -richtsystems in die Bodenanlage gefordert.

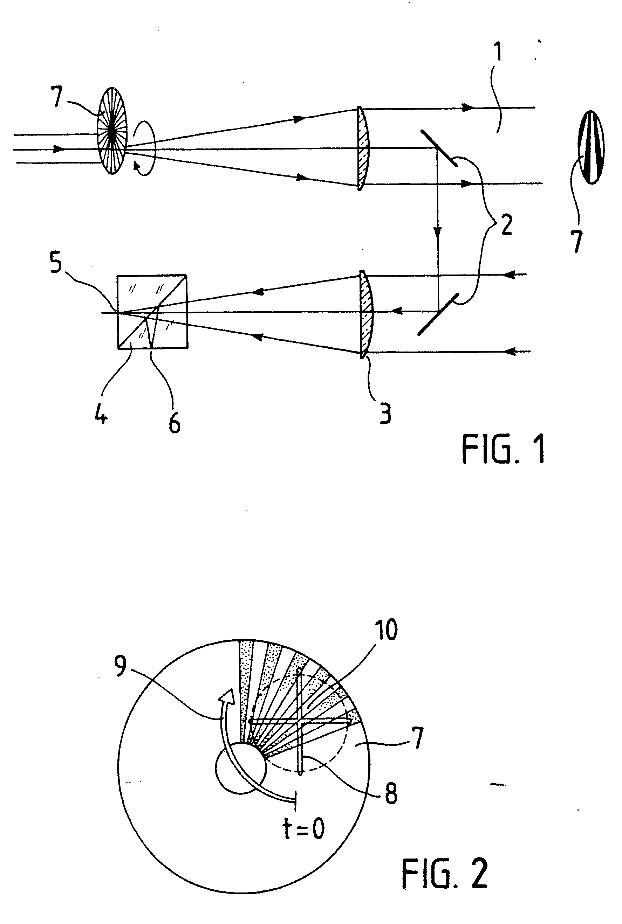

Das erfindungsgemäße Verfahren der Achsprüfung gestattet es nun, die Achse eines Leitstrahlsenders, der nach dem bekannten Reticle-Bildfeldmodulationsverfahren arbeitet, ohne aufwendige Signalverarbeitung zu vermessen. Zur Erläuterung des Funktionsprinzips sei angenommen, daß der Leitstrahl 1 über einen Retroreflektor 2 in das Visier 3 eingespiegelt wird (Fig. 1). Auf der optischen Achse des Visiers befindet sich ein Strahlteilerwürfel 4, dessen Rückseite die Strichmarke 5 trägt, während in der konjugierten Bildebene 6 eine kreuzförmige Schlitzblende 10 mit zugehörigem Strahlungsdetektor sitzt. Der Strahlteilerwürfel 4 trennt in bekannter Weise die Strahlung des Leitstrahles von der sichtbaren Strahlung ab. Das Zentrum der Kreuzschlitzblende 10 befindet sich in einer zum Fadenkreuzmittelpunkt spiegelsymmetrischen Position.

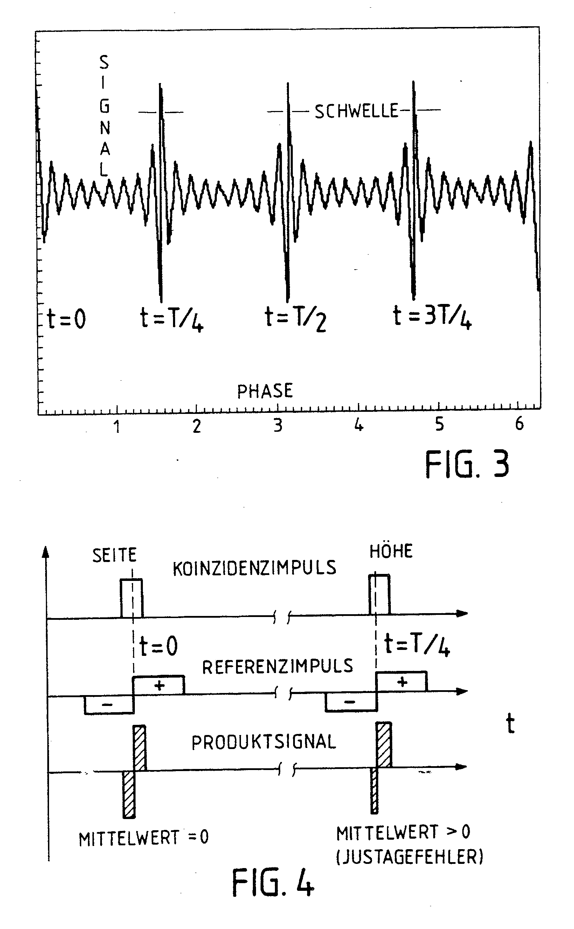

Fig. 2 zeigt die Form der Reticle-Modulatorblende 7, die im Strahlengang des Senders sitzt und das spezifische Leitstrahlmuster, bestehend aus abwechselnd ausgeleuchteten und dunklen Sektoren, erzeugt. Der kreisförmige, von hinten beleuchtete Bereich der Modulatorblende 7 definiert den Querschnitt des Leitstrahles. Er wird vom Senderobjektiv nach unendlich projiziert und gleichzeitig vom Objektiv des Visiers in die Ebene der Kreuzschlitzblende 8 abgebildet. Während der Sendephase bewegt sich das Zentrum der Modulatorblende 7 auf einer Kreisbahn 9 um die Leitstrahlachse, die mit der Achse der Kreuzschlitzblende 10 zusammenfällt. Für die Analyse kann man die Bewegung der Modulatorblende 7 durch eine gegensinnige Bewegung der Kreuzschlitzblende 10 ersetzen. Man erhält dann die Stärke des Strahlungssignales am Detektor aus der Überlagerung der beiden Blendenstrukturen. Wie in Fig. 2 zu erkennen, wird ein Spalt der Kreuzschlitzblende 10 nur dann voll ausgeleuchtet, wenn die Achse des überlagerten, transparenten Sektors der Modulatorblende 7 gerade exakt parallel zur entsprechenden Schlitzachse steht; bei allen anderen Stellungen wird der Schlitz etwa zur Hälfte abgeschaltet. Wird die Schlitzbreite/länge im Verhältnis zur Sektorbreite/länge geeignet gewählt, so kann der die Koinzidenz markierende Signalimpuls gegenüber allen weiteren Impulsen während einer Periode der Modulatorbewegung hervorgehoben werden (Fig. 3). Insgesamt treten während einer Umdrehung der Modulatorblende 7 vier Koinzidenzimpulse auf. Markiert man die Stellung der Modulatorblende 7 zum Zeitpunkt t = 0 und nach jeder weiteren Viertelumdrehung durch geeignete Referenzimpulse (Fig. 4), so ist das Produkt aus je einem Koinzidenzimpuls und dem dazugehörigen Referenzimpuls ein Maß für die Abweichung der Leitstrahlachse von ihrer Sollposition (gegeben durch den Kreuzschlitzmittelpunkt). Bei exakter Justierung (Kreuzachse fällt mit der Modulator-Rotationsachse zusammen) verschwindet das gemittelte Produktsignal. Ein positiver/negativer Wert zeigt eine Achsabweichung nach oben/unten bzw. links/rechts an.

## Ansprüche

1. Verfahren zur Harmonisierung der optischen Achsen eines einen Leitstrahl (1) aussenden Leitstrahlprojektors und eines Visiergerätes (3), wobei die Ablage zwischen beiden Achsen durch Vermessen eines aus dem Leitstrahl ausgekoppelten und in das Visiergerät eingespiegelten Referenzstrahls bestimmt wird, **dadurch gekennzeichnet,**
    - daß während einer Sendephase der Leitstrahl (1) und somit auch der Referenzstrahl nach dem an sich bekannten Bildfeldmodulationsverfahren (Reticle-Bildfeldmodulationsverfahren) unter Verwendung einer ein sternförmiges Sektorraster aufweisenden Modulatorblende (7), die sowohl um ihr Zentrum, als auch mit ihrem Zentrum auf einer Kreisbahn um die optische Achse des Leitstrahlprojektors rotiert, moduliert wird,
    - daß weiterhin nach jeder Vierteldrehung der Modulatorblende (7) um die optische Achse des Leitstrahlprojektors ein Referenzimpuls erzeugt wird,
    - und daß das Profil des Referenzstrahls mittels einer als Kreuzschlitzblende (10) ausgebildeten Blendenkonfiguration (8, 10), deren optische Achse mit derjenigen des Visiergerätes (3) zusammenfällt, abgetastet wird,
    - wobei am Ausgang eines Strahlendetektors, der hinter der Blendenkonfiguration (8, 10) angeordnet ist, während einer Umdrehung der Modulatorblende um die optische Achse des Leitstrahlprojektors vier Koinzidenzimpulse derart ausgbildet werden, daß aus dem Produkt aus Koinzidenzimpuls und zugehörigem Referenzimpuls die Ablage der optischen Achse des Leitstrahls (1) von ihrem Sollverlauf parallel zur optischen Achse des Visiergerätes (3) festgestellt werden kann.

2. Vorrichtung zur Durchführung des Verfahrens nach Anspruch 1 zur Harmonisierung der optischen Achsen eines einen Leitstrahl (1) aussendenden Leitstrahlprojektors und eines Visiergerätes (3), mit der die Ablage zwischen beiden Achsen durch Vermessen eines durch einen Retroreflektor (2) aus dem Leitstrahl (1) ausgekoppelten und in das Visiergerät eingespiegelten Referenzstrahls bestimmbar ist, **dadurch gekennzeichnet,**
    - daß im Strahlengang des Leitstrahlprojektors eine an sich bekannte Modulatorblende (7), die mit einem spezifischen Leitstrahlmuster in Form von durchlässigen und dunklen Sektoren versehen ist, drehbar sowohl um ihr Zentrum, als auch mit ihrem Zentrum .auf einer Kreisbahn um die optische Achse des Leitstrahlprojektors angeordnet ist,
    - daß weiterhin Mittel vorgesehen sind, mit denen nach jeder Vierteldrehung der Modulatorblende (7) um die optische Achse des Leitstrahlprojektors ein Referenzimpuls erzeugbar ist,
    - und daß sich in der optischen Achse des Visiergeräts (3) ein Strahlteilerwürfel (4) befindet, der auf seiner Rückseite mit einer Strichmarke (5) und in der zur Rückseite konjugierten Bildebene (6) mit einer als Kreuzschlitzblende (10) ausgebildeten Blendenkonfiguration (8, 10) mit zugehörigem Strahlendetektor versehen ist.

3. Vorrichtung nach Anspruch 2, **dadurch gekennzeichnet,** daß das Zentrum der Kreuzschlitzblende (10) in einer zum Mittelpunkt der Strichmarke symmetrischen Lage bezüglich der Spiegelebene des Strahlteilerwürfels (4) angeordnet ist.

## Claims

1. Process for the harmonisation of the optical axes of a guide-beam (1) emitting guide-beam projector and a sighting device (3), whereby the disposition between both axes is determined by measuring a reference beam which has been coupled out of the guide beam and mirrored into the sighting device, **characterised in that**

   - the guide beam (1), and thus also the reference beam, are modulated during an emitting phase by the already known image-field-modulation process (Reticle-image-field-modulation process) using a modulator diaphragm (7) with a star-shaped sector raster, which diaphragm rotates both around its centre but also with its centre around a circular path;
   - furthermore a reference pulse is created after each quarter rotation of the modulator diaphragm (7) around the optical axis of the guide-beam projector:
   - and that the profile of the reference beam is scanned by means of a diaphragm configuration (8, 10), which is arranged to be a cross-slot diaphragm and the optical axis of which coincides with that of the sighting device (3),
   - whereby four coincidence pulses are arranged at the output of a beam detector, which is arranged behind the diaphragm configuration (8, 10), during one rotation of the modulator diaphragm around the optical axis of the guide-beam projector so that the disposition of the optical axis of the light beam (1) from its intended path parallel to the optical axis of the sighting device (3) can be determined by the product of the coincidence pulse and associated reference pulse.

2. Device for executing the process according to claim 1 for the harmonisation of the optical axes of a light-beam (1) emitting light-beam projector and a sighting device (3), which device determines the disposition between both axes by measuring a reference beam, which has been coupled out of the light-beam (1) by a retro-reflector (2) and mirrored into the reference beam, **characterised in that**

   - an already known modulator diaphragm (7), which is provided with a specific guide-beam pattern in the form of permeable and dark sectors, is arranged in the beam path of the guide-beam projector to be rotatable both around its centre and with its centre on a circular path around the optical axis of the light-beam projector;
   - further means are provided for producing a reference pulse after each quarter rotation of the modulator diaphragm (7) around the optical axis of the light-beam projector;
   - and in that a beam-separator cube (4) is located in the optical axis of the sighting device (3), which cube is provided on its rear side with a division mark (5) and in the image plane (6), which conjugates to the rear side, with a diaphragm configuration (8, 10) which is a cross-slot diaphragm (10) with associated beam detector.

3. Device according to claim 2, **characterised in that** the centre of the cross-slot diaphragm (10) is arranged in a position symmetrical to the centre point of the division mark relative to the mirror plane of the beam-divider cube (4).

## Revendications

1. Procédé pour l'hamonisation des axes optiques d'un projecteur de faisceau de guidage (1) et d'un appareil de visée (3), l'écart entre les deux axes étant déterminé par mesure d'un faisceau de référence déclenché à partir du faisceau de guidage et réfléchi dans l'appareil de visée, **caractérisé** en ce que

   - pendant la phase d'émission, le faisceau de guidage (1), et par suite le faisceau de référence, est modulé selon le procédé connu en soi de modulation du champ d'image (procédé de modulation du champ d'image à réticule) en utilisant un diaphragme de modulateur (7) comportant une grille à secteur en forme d'étoile, qui tourne à la fois autour de son centre et avec son centre sur une orbite circulaire autour de l'axe optique du projecteur de faisceau de guidage,
   - de plus, après chaque quart de tour du diaphragme de modulateur (7) autour de l'axe optique du projecteur de faisceau de guidage, une impulsion de référence est produite,
   - et le profil du faisceau de référence est palpé au moyen d'une configuration de diaphragme (8, 10) se présentant sous la forme d'un diaphragme à fente en croix (10), dont l'axe optique coïncide avec celui de l'appareil de visée (3),

- quatre impulsions de coïncidence étant produites pendant une rotation du diaphragme du modulateur autour de l'axe optique du projecteur de faisceau de guidage à la sortie d'un détecteur de faisceau, placé derrière la configuration de diaphragme (8, 10), les impulsions de coïncidence étant produites de manière telle que le décalage de l'axe optique du faisceau de guidage (1) par rapport à sa trajectoire théorique parallèle à l'axe optique de l'appareil de visée (3) peut être déterminé à partir du produit de l'impulsion de coïncidence et de l'impulsion de référence correspondante.

2. Dispositif pour la mise en oeuvre du procédé selon la revendication 1 pour l'harmonisation des axes optiques d'un projecteur de faisceaux de guidage émettant un faisceau de guidage (1) et d'un appareil de visée (3), à l'aide duquel l'écart entre les deux axes peut être déterminé par mesure d'un faisceau de référence dérivé du faisceau de guidage (1) par l'intermédiaire d'un rétroréflecteur (2) et renvoyé dans l'appareil de visée, **caractérisé** en ce que

- le diaphragme de modulateur (7) connu en soi, qui est muni d'un modèle de faisceau de guidage spécifique sous forme de secteurs transparents et de secteurs sombres, mobile en rotation autour de son centre et avec son centre selon une trajectoire circulaire autour de l'axe optique du projecteur de faisceau de guidage, est disposé selon la trajectoire du faisceau du projecteur de faisceau de guidage,
- des moyens sont prévus, à l'aide desquels une impulsion de référence peut être produite après chaque quart de tour du diaphragme de modulateur (7) autour de l'axe optique du projecteur de faisceau de guidage,
- un bloc diviseur de faisceaux (4) est disposé sur l'axe optique de l'appareil de visée (3), ledit bloc comportant sur sa face arrière un repère (5) et le plan d'image (6) conjugué à la face arrière est muni d'une configuration de diaphragme (8, 10) réalisée sous forme de diaphragme à fente en croix (10) avec détecteur de faisceau correspondant.

3. Dispositif selon la revendication 2, **caractérisé** en ce que le centre du diaphragme à fente en croix (10) est placé dans une position symétrique au centre du repère par rapport au plan de réflexion du bloc diviseur de faisceau (4).

FIG. 1

FIG. 2

FIG. 3

FIG. 4